# EUROPEAN PATENT SPECIFICATION

(11) **EP 3 507 486 B1**
(45) Date of publication and mention of the grant of the patent: **07.08.2024**
(21) Application number: 16751669.9
(22) Date of filing: 08.06.2016
(51) Int. Cl.: F03D 3/00, F03D 3/06

(54) **VARIABLE TILTING BLADE TWIN TURBINE WIND MILL**
DOPPELTURBINENWINDRAD MIT SCHAUFEL MIT VARIABLER NEIGUNG
ÉOLIENNE À DOUBLE TURBINE À PALES À INCLINAISON VARIABLE

(30) Priority: 15.04.2016 IN 201641013184
(43) Date of publication of application: 10.07.2019
(73) Proprietor: Damodaran, Ethirajulu, Chennai 600017 (IN)
(72) Inventor: Damodaran, Ethirajulu, Chennai 600017 (IN)
(74) Representative: Jeck, Anton
(86) International application number: PCT/IN2016/000149
(87) International publication number: WO 2017/179063

(56) References cited:
- EP-A1- 2 993 343
- WO-A1-2012/172443
- FR-A- 1 021 252
- US-A- 1 540 583

## Description

### Background:

For the last so many years, windmills operating all over the world are designed using fixed blade turbines. Further, to increase the torque, long narrow blades with bulge at the bottom have been used. Wind drag and consequent reduction in conversion efficiency have been the in-built disadvantages of these designs.

Mr. Albert Betz, the pioneer in fluid dynamics has declared that at any given time, a maximum of 59% of the wind energy can be converted into kinetic energy on the basis of fluid dynamics.But, till date, because of the above stated drag factor, all the current wind mills are able to harvest only 30 to 35% of the wind energy and convert it into electrical energy.

To get over these drawbacks, attempts were made in horizontal axis designs, to increase efficiency by designing various modifications to the blades or providing unimaginably long blades or with a folded leaf like blade with a slight curve at their tip. Only very marginal improvements could be achieved due to these changes. Thus the largest windmill weighing around 3500 tonnescould produce only 8 megawatts of power so far.

In the vertical axis designs, attempts were made to alter the orientations of the blade and frame structures but could not achieve any major improvement. Thus, till date, the horizontal axis windmills are the widely prevalent power producing windmills throughout the world.

To ensure free uninterrupted flow of wind, the windmills are also being located in the mid-seas but with very limited further improvements in power generation. Prior art examples are disclosed in US1540583A and WO2012/172443A1.

### Summary of the present invention:

To overcome the above stated deficiencies in the current designs of windmills, it is now being proposed to make use of a horizontal axis with two wind turbines one at each end with an alternator in between. The turbine blades are designed to change their orientation from knife to blade and then blade to knife while rotating, eliminating wind drag and ensuring free flow of wind and smooth rotation leading to increased conversion of the wind energy into electrical energy. Unlike the existing fixed blades, they are unique in design being flat, broad and long.

This novel design can be used for replacing all the existing and operating windmills all over the world by upgrading to the twin turbine tiltingdesign leading to multiple fold increase in the operating efficiency and power generation at minimal cost.

Thus, as incorporated in this invention, the turbine blade travels along withthe wind being pushed by it, with the blade side facing the wind along its upper semicircular trajectory (half way mark of a circle) till it reaches the opposite end. In other words, for the upper 180 degrees travel of its circular orbit, it functions as a blade.

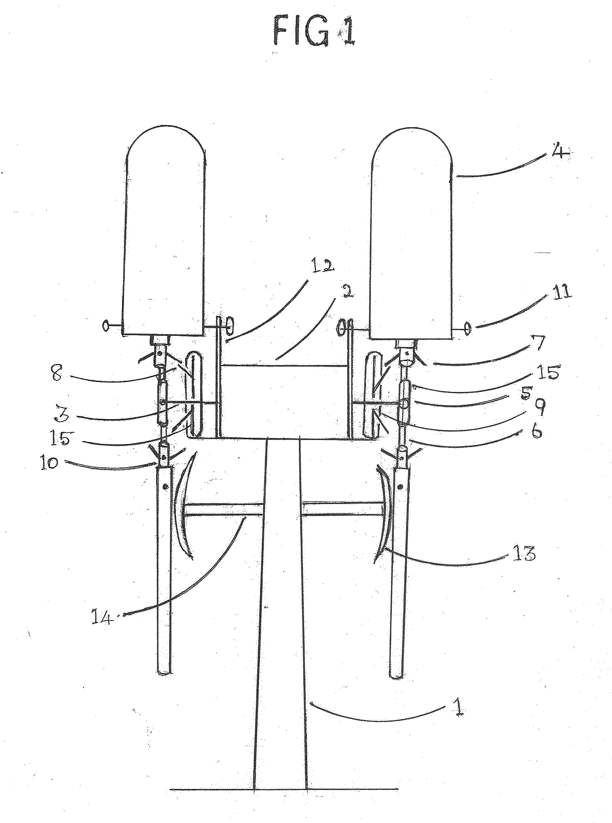

In Figure 1, the above embodiment is shown pictoriallyas an erected windmill tower. The mill tower(1) consists of nacelles(2),horizontal shaft(3), blades(4),central hub(5),blade shaft(6), blade handle knob(7), guide ring lever (8),guide ring(9),blade handle(10),blade direction stabilizer(11), upper circularguide ring(12), lower guide ring plate(13), lower guide ring supporting rod(14) and inner guide ring(15).

Figure 2 shows the part of the windmill as a sideview showing the blades(4) , the central hub(5)inner guide ring(15)and blade handle(10) two of them with blade orientation and the remaining two with knife orientation.

Figure 3 shows the blade(4),blade handle(10),upper circular guide ring(12),lower guide ring plate(13),blade handle knob(7), blade direction stabilizer(11)and central hub(5).

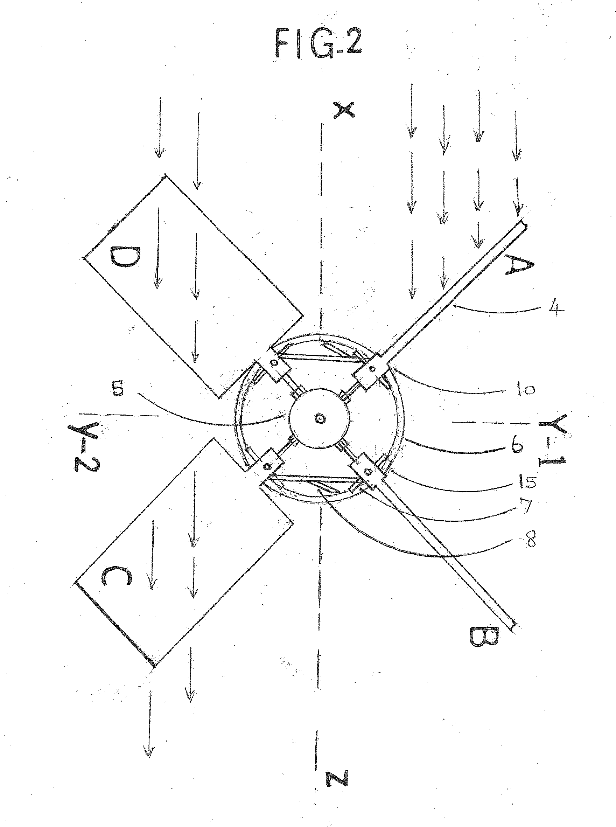

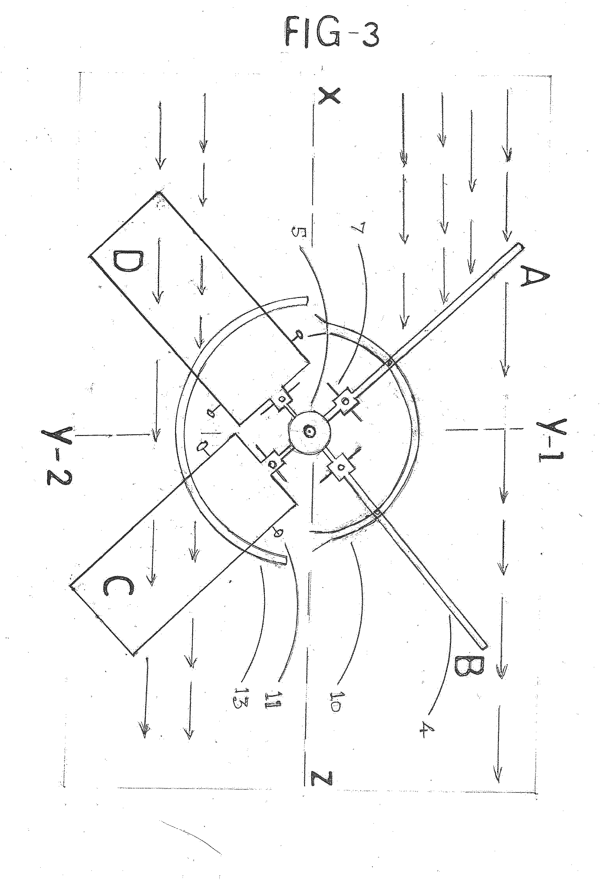

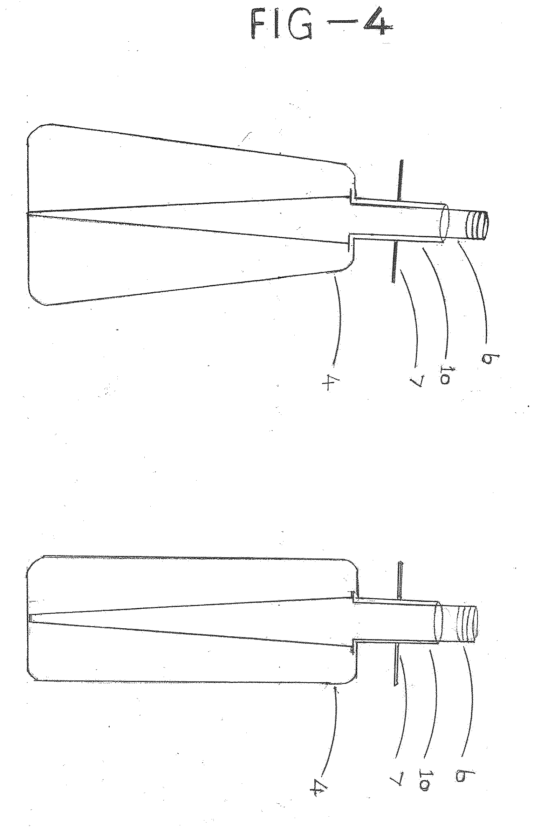

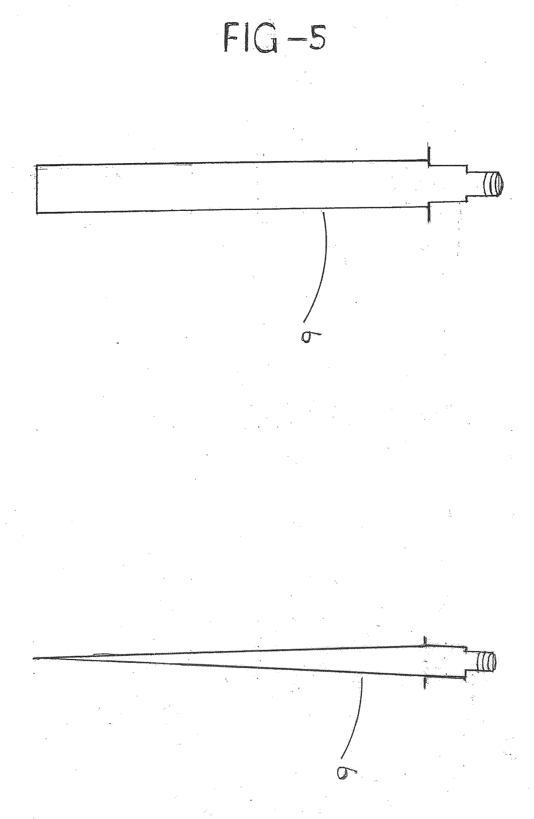

Figure 2 and 3 also show the functioning of the tilting blades(4) and central hub (5) , as side view, starting from point X which is at 0 degree on the horizontal line to point Z which is at 180 degrees , the blade travels upwards pushed by the wind. On reaching point Z , it tilts and varies its orientation into a knife form and continues its travel for the remaining 180 degrees of lower half of the circular orbit, piercing through the wind eliminating wind drag and resistance.

### Operating Mechanism of this Design:

As given in Figures 2 and 3, when wind hits the blade A at point Y-1 facingit,the turbine starts moving whereby subsequent blade D which is near point X shifts its orientation from the knife mode to the blade mode, aided by the blade handle knob being pushed down by the guide ring's first lever which ensures the tilt and starts climbing up.

During this process when blade B in the blade mode which is close to point Z, gets its handle knob pushed upwards by the guide ring's second lever making it to change its orientation from blade to knife and travels downwards along the bottom semicircle till it reaches point X, crossing point Y-2..

When this happens, blade C which is in knife orientation near the point Y-2, travels upwards as such till it reaches point X and shifts its orientation from knife to blade mode aided by its blade handle knob pushed downwards by the guide ring lever.

The simultaneous changing of the orientations of the four blades from blade mode to knife mode and knife mode to blade mode with the aid of the wind thrust is achieved by the unique design of blade handle knob which is further described below.

The inner constituents of blade handle knob(7) are unique.When it moves upwards it gets pushed down by the inner ring lever (8). Both the knob and the lever are placed at an angle of 45 degrees and when one meets the other , the resultant tilt will be 90 degrees whereby the blade's orientation is shifted from blade mode to knife mode and vice versa. The same blade when it reaches point Z, the consecutive knob gets pushed up by the inner ring second lever , thus the continuous tilting- variation of the blade's orientation is achieved leading to the maximization of the torque and power generation.

The shaft of the blades are uniquely designed whereby the blade is securely fastened to the blade shaft(6) by its reduced handle cum neck and sealed with a cup and locked with provision of a hole in the middle for facilitating easy rotation of the blade alone. This narrow neck prevents the blade from sliding out of the shaft in its downward travel. The shaft is firmly secured to the hub by means techniques well known to the art.

Wind being known for its varying speed and direction, would make the blades to wobble in their circular orbits in both the orientations. Safeguards should therefore be made at all times to arrest this. To achieve this, a round metal plate is attached to the side of the blade perpendicular to it to function as blade direction stabilizer(11). When the blade is in its upper orbit, this component travels inside the upper circular guide ring (12) preventing the wobbling of the blades. Likewise, a flat semicircular lower guide ring plate (13) fixed to the windmill's tower with props prevents the blades' wobbling in its lower orbit.

To eliminate friction, noise and loss of torque, the knobs, levers, guide plates and guide rings are lined with suitable friction eliminating materials.

At times of emergency, when the turbine needs to be halted, a design provision is made to withdraw the guide ring thrust levers whereby the blades' orientation as knife is prolonged, leading to halting of the turbine.

## Claims

1. A wind generator turbine with horizontal axis incorporating tilting- varying blade (4) comprising
a) a shaft (3) securely fastened to a turbine hub (5) attached with a tilting- varying blade (4),
**characterized in**
b) **That** the position of a shaft (3) is fixed while an attached blade (4) alone revolves around it changing its orientation from a knife mode to a blade (4) mode and vice versa,
c) **That** the blade (4) is securely fastened to a shaft (6) by its reduced handle cum neck and sealed with a cup and locked with provision of a hole in the middle for facilitating easy rotation of the blade (4) alone,
d) **That** the blade's varying orientation is achieved by a set of knobs (7), mounted on the blade's handle (10) at an angle of 90 degrees apart plus 45 degrees in variance to the alignment of the blade's edges, aided by guide ring levers (8),
e) **That** one knob (7) of the blade handle (10) in association with the guide ring's first lever enables the tilting of the blade's orientation from knife to blade mode,
f) **That** the blade's consecutive knob (7) coupled with the blade ring's second lever enables the tilting of the blade (4) from the blade (4) to the knife mode,
g) **that** the blade direction stabilizer (11) with the aid of upper circular guide ring (12) ensures the smooth rotation of the turbine without being disturbed by the changing wind, course and direction preventing the resultant wobbling,
h) Where the lower flat plate ring (13) likewise prevents the wobbling of the blade (4) while it is in its lower orbit of rotation.

2. The windmill turbine of claim 1, **characterized in that** the shape of the blade (4) is designed in a rectangular, flat and broad manner for harvesting maximum wind thrust leading to increased power generation.

3. The windmill turbine of claim 1, **characterized in that** by replacing the mechanical guiding levers with electronic Wi-Fi technique geared motor, the blade's orientation from blade (4) to knife and vice-versa could be achieved leading to friction free synchronized rotation of the turbine.

## Patentansprüche

1. Windgeneratorturbine mit horizontaler Achse, die ein kippbares Blatt (4) enthält, das Folgendes aufweist:
a) eine Welle (3), die fest mit einer Turbinennabe (5) verbunden ist, an der eine schwenkbare Schaufel (4) befestigt ist,
**gekennzeichnet durch**
b) dass die Position einer Welle (3) feststeht, während sich ein angebrachtes Blatt (4) allein um sie dreht und ihre Ausrichtung vom Messer- zum Blattmodus (4) und umgekehrt ändert,
c) dass das Blatt (4) durch ihren reduzierten Griffhals sicher an einem Schaft (6) befestigt und mit einem Becher abgedichtet und verriegelt ist, wobei in der Mitte ein Loch vorgesehen ist, um eine leichte Drehung des Blatts (4) allein zu ermöglichen,
d) Die unterschiedliche Ausrichtung des Blatts wird durch eine Reihe von Knöpfen (7) erreicht, die am Griff (10) des Blatts in einem Winkel von 90 Grad plus 45 Grad Abweichung von der Ausrichtung der Kanten des Blatts angebracht sind und durch Führungsringhebel (8) unterstützt werden,
e) dass ein Knopf (7) des Blattgriffs (10) in Verbindung mit dem ersten Hebel des Führungsrings das Kippen der Ausrichtung des Blatt vom Messer- zum Blattmodus ermöglicht,
f) dass der mit dem zweiten Hebel des Blattrings gekoppelte Folgeknopf (7) des Blatts das Kippen des Blatts (4) vom Blatt- in den Messermodus ermöglicht,
g) dass der Blattrichtungsstabilisator (11) mit Hilfe des oberen kreisförmigen Führungsrings (12) die gleichmäßige Drehung der Turbine sicherstellt, ohne dass sie durch den wechselnden Wind, den Kurs und die Richtung gestört wird, wodurch das daraus resultierende Taumeln verhindert wird,
h) Der untere flache Plattenring (13) verhindert ebenfalls das Taumeln des Messers (4), während es sich in seiner unteren Umlaufbahn befindet.

2. Windturbine nach Anspruch 1, **dadurch gekennzeichnet, dass** die Form des Flügels (4) rechteckig, flach und breit gestaltet ist, um einen maximalen Windschub zu erzielen, der zu einer erhöhten Energieerzeugung führt.

3. Windturbine nach Anspruch 1, **dadurch gekennzeichnet, dass** durch den Ersatz der mechanischen Führungshebel durch einen Getriebemotor mit elektronischer Wi-Fi-Technik die Ausrichtung der Schaufel von der Schaufel (4) zum Messer und umgekehrt erreicht werden kann, was zu einer reibungsfreien synchronisierten Drehung der Turbine führt.

## Revendications

1. Turbine à générateur éolien avec un axe horizontale contenant une lame inclinable (4) présentant ce qui suit :
a) une onde (3) qui est reliée à titre fixe à un moyeu de turbine (5) à laquelle est fixée une aube pivotante (4) est **caractérisée** de sorte que
b) la position de l'onde (3) est fixe tandis qu'une lame montée (4) est rotatif autour d'elle et que son orientation change du modus de la lame (4) et vice versa,
c) que la lame (4) est fixée par le biais de son col de poignée réduit à titre de sécurité à une tige (6) et qu'elle est étanchéifiée et verrouillée grâce à un gobelet où un trou est prévu au milieu pour permettre une seule légère rotation de la lame (4),
d) L'orientation différente de la lame est obtenue grâce à un certain nombre de boutons (7) qui sont disposés sur la poignée (10) de la lame à un angle de 90 grade plus 45 grade par dérogation de l'orientation des bords de la lame et qui sont soutenus par le biais d'une poignée de bague de guidage (8),
e) qu'un bouton (7) de la poignée de la lame (10) permet en relation avec la première poignée de la bague de guidage l'inclinaison de l'orientation du modus de la lame,
f) que le bouton qui suit (7) est couplé à la deuxième poignée de l'anneau de la lame de la lame permettant l'inclinaison de la lame (4) du modus de la lame,
g) que le stabilisateur de la direction de la lame (11) garantit à l'aide de la bague de guidage supérieure circulaire (12) la rotation homogène de la turbine sans qu'elle dérange par un vent variable la trajectoire et la direction par le biais desquelles le vacillement en résultant est empêché,
h) L'anneau plat inférieure (13) empêche également le vacillement de la lame (4) tandis qu'il se situe dans son orbite inférieure.

2. Turbine éolienne selon la revendication 1 est **caractérisée** de sorte que la forme du vantail (4) est conçue de manière rectangulaire, plate et large pour obtenir une poussée de vent maximale menant ainsi vers une production d'énergie accrue.

3. Turbine éolienne selon la revendication 1 est **caractérisée** de sorte que l'orientation de l'aube de l'aube (4) vers la lame et vice versa pourrait être obtenue grâce à la substitution du levier de guidage mécanique grâce à un motoréducteur grâce à une technique électronique Wifi menant ainsi vers une rotation sans friction synchronisée de la turbine.
